# DEMANDE DE BREVET EUROPEEN

(11) **EP 0 676 328 A2**
(43) Date de publication de la demande: **11.10.1995**
(21) Numéro de dépôt: 95400716.7
(22) Date de dépôt: 31.03.1995
(51) Int. Cl.: B64C 25/34, B64C 25/10

(54) **Train d'atterrissage relevable pour avion gros porteur, du type à relevage vertical**

(30) Priorité: 08.04.1994 FR 9404174
(71) Demandeur: MESSIER-DOWTY S.A., F-78140 Velizy Villacoublay (FR)
(72) Inventeur: Derrien, Michel, F-78000 Versailles (FR); Brisedou, Philippe, F-94260 Fresnes (FR)
(74) Mandataire: Jaunez, Xavier

(57) **Abrégé**

L'invention concerne un train d'atterrissage relevable du type comportant une pluralité de jambes agencées les unes derrières les autres.

Conformément à l'invention, chaque jambe (101) comporte une pièce de structure (102) solidaire de la structure d'avion, un balancier (103) articulé sur cette pièce de structure et relevable verticalement avec sa paire de roues (R), un panneau (106) articulé sur la pièce de structure, et un amortisseur (113) reliant ledit panneau (106) à l'extrémité libre du balancier (103) . Un dispositif de contreventement commun (104) est en outre associé aux jambes (101), avec d'une part une barre (108) reliant entre eux les panneaux (106), et d'autre part une contre-fiche (110) à alignement dont un bras (111) est articulé sur une pièce de structure (102) avant, et l'autre bras (112) est articulé sur la barre (108) au voisinage de la pièce de structure immédiatement en arrière. Les balanciers (103) sont relevables simultanément en actionnant un vérin de commande commun (105), lequel vérin sert également à briser l'alignement de la contre-fiche pour le relevage du train.

## Description

La présente invention concerne les trains d'atterrissage relevables pour avions gros porteurs.

Dans le cas des avions gros porteurs, c'est-à-dire dont le poids dépasse une centaine de tonnes, et en particulier à voilure haute, il est généralement prévu des trains de fuselage multi-roues afin d'avoir une répartition convenable des charges exercées sur la piste par ces trains d'atterrissage.

Chacun des trains d'atterrissage est alors du type comportant une pluralité de jambes, indépendantes ou non, agencées les unes derrière les autres pour former, en position train bas, une rangée parallèle au plan longitudinal médian de l'avion, et en extrémité de chacune desquelles est montée une paire de roues en diabolo. Ainsi, en position train bas, chaque atterrisseur comporte une rangée de diabolos disposés les uns derrière les autres dans la direction du plan longitudinal médian de l'avion, le nombre des diabolos pouvant aller en général de deux à sept.

On a déjà proposé de réaliser un train d'atterrissage relevable multi-roues à relevage vertical, avec un couplage de tous les diabolos d'une même rangée par une barre commune de commande, comme illustré dans les documents US-A-3 315 919 et GB-A-1 042 190. Chaque jambe est alors réduite à un simple balancier articulé directement sur la structure d'avion, dont le basculement est obtenu par une tringlerie de couplage coulissant horizontalement et reliée à chaque balancier par un amortisseur associé.

Dans le document GB-A-1 042 190, le relevage du train est commandé par un vérin de manoeuvre commun accroché sur la structure d'avion, ce qui est avantageux pour la simplicité, mais le verrouillage en position train bas est assuré par un système interne au vérin (par exemple un verrouillage à griffes ou à segments), de sorte que la descente secours en cas de panne hydraulique peut être rendue difficile voire impossible.

On retrouve une approche analogue dans le document US-A-4 422 604 de la demanderesse, avec un vérin de manoeuvre commun dont le corps est articulé sur la structure d'avion et dont la tige est articulée sur un levier. Il peut être prévu un moyen de verrouillage aux positions train bas et train haut constitué par une contre-fiche briseuse équipée de son vérin de désalignement. La structure de ce moyen de verrouillage reste toutefois relativement complexe, et la répartition des charges est difficile à organiser lorsqu'un nombre de jambes important est utilisé (par exemple trois jambes).

Le document US-A-3,041,020 décrit enfin un train pour avion gros porteur, du type à relevage vertical, avec deux jambes indépendantes relevables réalisées chacune sous la forme d'un balancier articulé en partie inférieure d'une pièce de structure, dont la jambe arrière est seule équipée d'un amortisseur car, en position train bas, elle seule assure le contact avec le sol, la jambe avant n'intervenant qu'après. Le verrouillage en position train bas est assuré par une contre-fiche à alignement pour la jambe avant, et par une butée du corps de l'amortisseur pour la jambe arrière.

L'invention a précisément pour but de concevoir un train d'atterrissage relevable, du type à relevage vertical, qui ne présente pas les inconvénients et/ou limitations précités.

L'invention a ainsi pour objet de réaliser un train d'atterrissage relevable dont la structure confère une grande sécurité, tant au regard des manoeuvres de sortie qu'au regard de la répartition des charges, avec en particulier un verrouillage en position train bas qui est très fiable.

Il s'agit plus particulièrement d'un train d'atterrissage relevable pour avion gros porteur, du type à relevage vertical, comportant une pluralité de jambes agencées les unes derrière les autres pour former, en position train bas, une rangée parallèle au plan longitudinal médian de l'avion, et en extrémité de chacune desquelles est montée une paire de roues, caractérisé en ce que chaque jambe comporte une pièce de structure rigidement solidaire d'une structure d'avion, un balancier articulé sur l'extrémité inférieure de cette pièce de structure en pouvant pivoter autour d'un axe perpendiculaire au plan longitudinal médian de l'avion, de façon que ledit balancier soit relevable verticalement avec sa paire de roues, un panneau articulé sur l'extrémité supérieure de ladite pièce de structure en pouvant pivoter autour d'un axe parallèle à l'axe précité, et un amortisseur reliant de façon articulée le panneau à l'extrémité libre du balancier, et en ce qu'un dispositif de contreventement commun est associé à ces jambes indépendantes, ledit dispositif comportant d'une part une ou plusieurs barres reliant entre eux les panneaux des jambes pour former des parallélogrammes articulés, de façon que les balanciers soient relevables simultanément en actionnant un vérin de manoeuvre commun, et d'autre part une contre-fiche à alignement constitué d'un premier bras articulé sur une pièce de structure avant, d'un second bras articulé sur la ou l'une des barres au voisinage de la pièce de structure immédiatement en arrière, ladite contre-fiche étant alignée en position train bas.

De préférence, le vérin de manoeuvre commun est articulé d'une part sur le premier bras de la contre-fiche, et d'autre part sur un prolongement du panneau adjacent à ce premier bras s'étendant au-delà de l'axe d'articulation dudit panneau, de sorte que ledit vérin sert à la fois à briser l'alignement de la contre-fiche et à relever le train.

Selon un mode d'exécution particulier, le premier bras de la contre-fiche est plus long que le second bras, et il est articulé sur la pièce de structure avant coaxialement à l'axe d'articulation du panneau associé. Avantageusement alors, la contre-fiche est équipée d'un ressort d'aide au verrouillage dans sa position alignée, reliant le second bras de celle-ci au panneau adjacent à ce second bras, et cette contre-fiche est agencée de telle façon que, en position alignée, sa direction rencontre l'articulation reliant le panneau adjacent au second bras et la ou les barres de liaison associées.

De préférence encore, chaque pièce de structure est reliée à la structure d'avion à la fois directement, et indirectement par l'intermédiaire d'éléments de contreventement comportant un panneau et au moins une bielle.

Il est également intéressant de prévoir que les composants de chaque jambe sont essentiellement identiques et interchangeables pour le train gauche et le train droit de l'avion.

Dans le cas particulier d'un train d'atterrissage comportant trois jambes agencées les unes derrière les autres, il est avantageux que la contre-fiche relie la pièce de structure qui est la plus en avant à la barre qui relie le panneau articulé sur cette pièce de structure au panneau central.

Il est alors possible de prévoir que la barre précitée relie également le panneau central au panneau qui est le plus en arrière, ou en variante que le panneau central et le panneau qui est le plus en arrière sont reliés par une barre distincte de la barre précitée, mais qui reste dans le prolongement de celle-ci.

D'autres caractéristiques et avantages de l'invention apparaîtront plus clairement à la lumière de la description qui va suivre et des dessins annexés, concernant un mode de réalisation particulier, en référence aux figures où :
- la figure 1 illustre en vue latérale un tain d'atterrissage conforme à l'invention, ici à trois diabolos, en position train bas (amortisseurs détendus), la position train haut étant seulement schématisée par des traits mixtes pour les composants principaux ;
- la figure 2 est une vue de dessus partielle du train précité, toujours dans la position train bas ;
- la figure 3 illustre le même train en vue frontale, là encore dans la position train bas (seules les roues sont représentées, en traits mixtes, pour la position train haut) ;
- la figure 4, qui est à rapprocher de la figure 1, illustre le même train en position train haut.

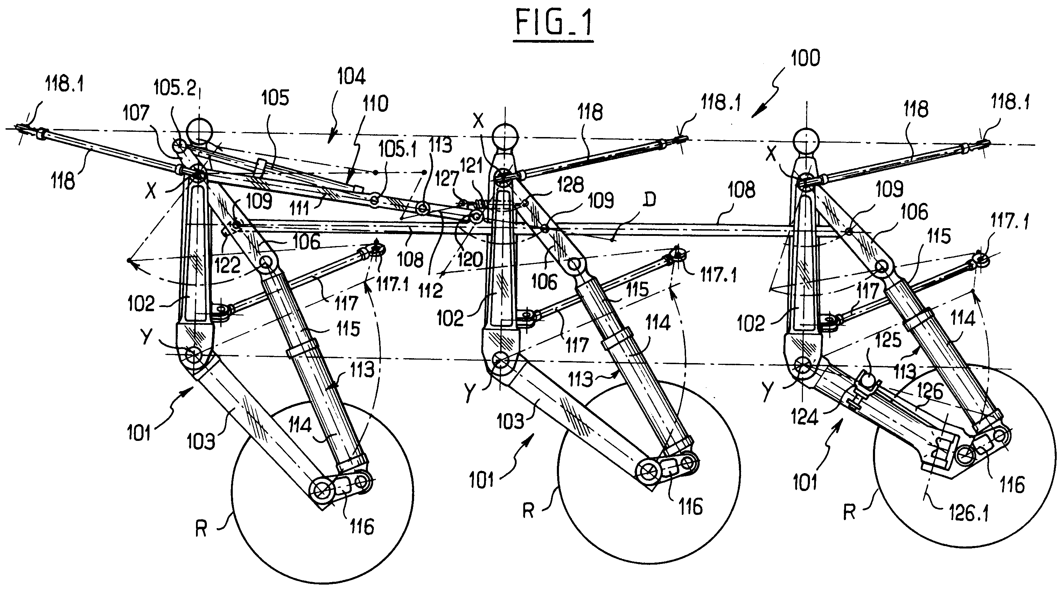

La figure 1 illustre un train d'atterrissage relevable 100 pour avion gros porteur conforme à l'invention. Le train d'atterrissage comporte en l'espèce trois jambes 101 agencées les unes derrière les autres pour former, en position train bas, une rangée parallèle au plan longitudinal médian de l'avion, mais il va de soi que l'invention n'est aucunement limitée au nombre de jambes que comporte le train d'atterrissage.

Chacune de ces jambes est essentiellement identique aux autres, hormis en l'espèce la jambe qui est la plus en arrière, qui comporte ici un dispositif de commande d'orientation visant à améliorer la manoeuvrabilité du train lors du roulage sur piste, mais ce mode d'exécution particulier, qui est en dehors du cadre de l'invention, ne constitue naturellement qu'un moyen non nécessaire.

Chaque jambe 101 comporte une pièce de structure 102 qui est rigidement solidaire de la structure d'avion, et un balancier 103 qui est articulé sur l'extrémité inférieure de cette pièce de structure, en pouvant pivoter autour d'un axe Y perpendiculaire au plan longitudinal médian de l'avion, de façon que ce balancier soit relevable verticalement avec sa paire de roues R en diabolo, par actionnement d'un vérin de manoeuvre 105 qui est ici commun à l'ensemble des jambes 101.

Chaque jambe 101 comporte en outre un panneau 106 articulé sur l'extrémité supérieure de la pièce de structure 102 en pouvant tourner autour d'un axe X qui est parallèle à l'axe Y précité. Un amortisseur 113 relie de façon articulée chaque panneau 106 à l'extrémité libre du balancier 103, au niveau d'un appendice terminal 116 de celui-ci. En l'espèce, l'amortisseur 113 comporte un corps 114 articulé sur l'appendice 116 précité, et une tige 115 articulée au niveau de l'extrémité inférieure du panneau correspondant 106.

Chaque jambe 101 comporte ainsi un élément fixe (pièce de structure 102) et trois éléments articulés (balancier 103, amortisseur 113, panneau 106) formant un ensemble déformable qui reste dans un même plan parallèle au plan longitudinal médian de l'avion. Les composants de chaque jambe sont de préférence essentiellement identiques, et interchangeables pour le train gauche et le train droit de l'avion.

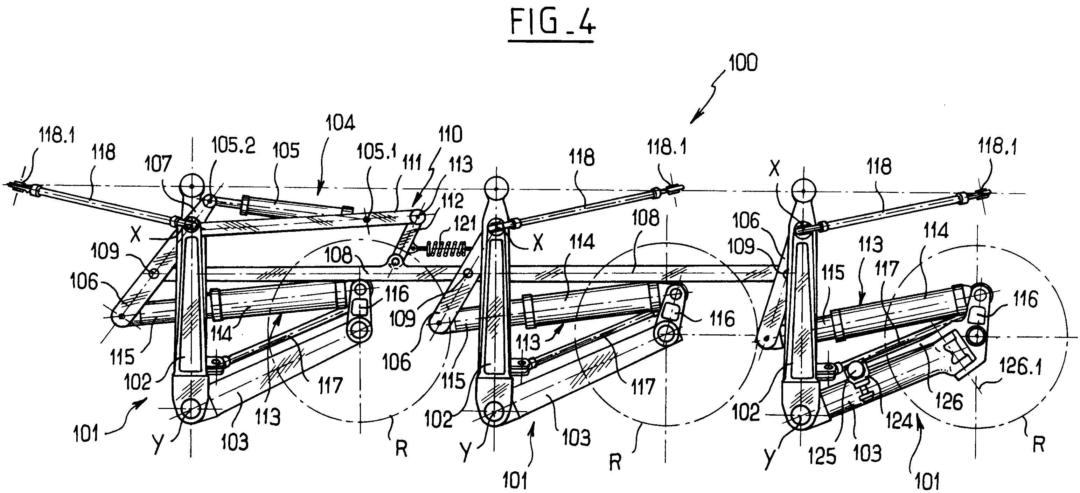

La figure 1 montre chaque ensemble déformable dans la position train bas, et la figure 4 chaque ensemble en position train haut. Sur la figure 1, on constate que les axes de roues sont légèrement décalés en hauteur, ceci pour tenir compte de l'attitude cabrée de l'avion lors de l'atterrissage : un tel agencement est avantageux dans la mesure où il permet de mieux répartir les charges exercées sur les jambes du train.

Le train d'atterrissage relevable 100 comporte en outre un dispositif de contreventement commun 104 qui est associé à ses jambes indépendantes 101. Le dispositif de contreventement 104 comporte d'une part une ou plusieurs barres 108 reliant entre eux les panneaux 106 des jambes 101 pour former des parallélogrammes articulés, et d'autre part une contre-fiche 110 à alignement, constituée de deux bras référencés 111 et 112.

Le premier bras 111 de la contre-fiche 110 est articulé sur une pièce de structure 102 avant, en l'espèce la pièce de structure qui est la plus en avant, et le second bras 112 est articulé sur la barre reliant le panneau 106 articulé sur cette pièce de structure au panneau 106 central. La barre 108 de liaison présente à cet effet un appendice 120 sur lequel vient s'articuler le bras 112. L'articulation des deux bras 111, 112 de la contrefiche 110 est notée 113. Cette contre-fiche 110 est agencée de telle façon que ses deux bras 111, 112 forment un alignement en position train bas du train d'atterrissage, ainsi que cela est visible sur la figure 1. On constate d'ailleurs que la contre-fiche 110 est agencée de telle façon que dans cette position alignée, sa direction, notée D, rencontre l'articulation 109 reliant le panneau 106 adjacent au second bras 112 et la barre de liaison associée 108. Un tel agencement est naturellement favorable dans la mesure où il évite des efforts de flexion parasites au niveau de la partie avant de cette barre de liaison.

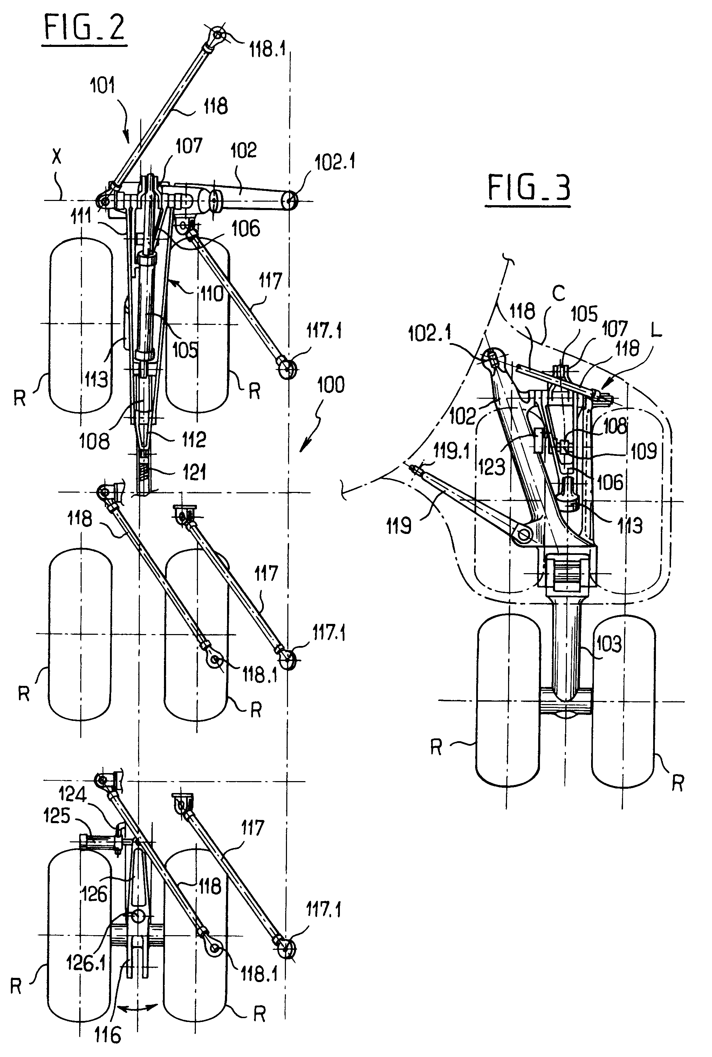

Conformément à un mode d'exécution particulièrement avantageux, le vérin de manoeuvre commun 105 est articulé d'une part sur le premier bras 111 de la contrefiche 110, au niveau d'un axe 105.1, et d'autre part sur un prolongement 107 du panneau 106 adjacent à ce premier bras, lequel prolongement s'étend au-delà de l'axe d'articulation X dudit panneau. Ainsi que cela est mieux visible sur les figures 2 et 3, le prolongement 107 du panneau 106 concerné peut être réalisé sous la forme d'un appendice en forme de fourche, permettant d'accrocher l'extrémité de la tige du vérin de commande 105 au niveau d'un point d'accrochage 105.2.

Grâce à cet agencement, le vérin de manoeuvre commun 105 sert à la fois à briser l'alignement de la contre-fiche 110 et à effectuer les manoeuvres de relevage ou d'abaissement du train. En particulier, pour passer de la position train bas à la position train haut, le mouvement de rentrée de la tige du vérin de commande 105 crée un couple amorçant le désalignement de la contre-fiche en même temps qu'il a tendance à tirer vers l'avant la ou les barres 108 de liaison. En position train haut, la ou les barres 108 sont complètement avancées, et l'on constate que les panneaux 106 ont chacun basculé de l'autre côté de la pièce de structure associée 102. Les panneaux 106 sont ainsi en arrière des pièces de structure 102 en position train bas, et en avant desdites pièces en position train haut.

Cet agencement du vérin de manoeuvre commun 105 convient avec un premier bras 111 de la contre-fiche 110 qui est plus long que le second bras 112, comme cela est illustré ici. Il est par ailleurs avantageux de prévoir que la contre-fiche 110 est équipée d'un ressort 121 d'aide au verrouillage dans sa position alignée. Ce ressort d'assistance 121, visible sur les figures 1 et 4, et en partie sur la figure 2, est accroché d'une part sur un appendice 127 du second bras 112 de la contre-fiche 110, et d'autre part, en un point 128, sur le panneau 106 de la jambe centrale. Le point d'accrochage 128 peut être par exemple situé à mi-chemin entre le point d'accrochage 109 de la ou des barres de liaison 108 et de l'axe X du panneau associé.

Chaque pièce de structure 102 est rigidement solidaire de la structure de l'avion, et cette solidarisation est assurée par une liaison directe en extrémité supérieure de ladite pièce (point 102.1), et indirectement par l'intermédiaire d'au moins deux éléments de contreventement. En l'espèce, on a prévu un panneau 119 (visible sur la figure 3), dont l'axe de liaison à la pièce de structure 102 est parallèle au plan longitudinal médian de l'avion et qui est lié au point 119.1 à la structure d'avion, une bielle de contreventement 117 articulée par une extrémité sur la pièce de structure 102, et relié au point 117.1 par son autre extrémité à la structure d'avion, et enfin une bielle supplémentaire 118, qui est essentiellement une bielle de reprise d'efforts visant à augmenter encore la rigidité, cette dernière bielle étant articulée par une extrémité en partie haute de la structure 102, et étant reliée par son autre extrémité à la structure d'avion au point 118.1. Ainsi que cela est visible sur les figures 1, 2 et 4, chacune des jambes 101 comporte ses propres moyens de contreventement.

La barre de liaison 108 reliant le panneau 106 avant au panneau 106 central peut relier également le panneau central précité au panneau 106 qui est le plus en arrière, cette barre étant alors une barre unique qui reste sensiblement horizontale lorsque l'avion est au sol. Il pourra s'avérer plus intéressant de prévoir des barres 108 indépendantes entre elles, chaque barre reliant deux panneaux adjacents, mais ces barres restant dans le prolongement l'une de l'autre.

On distingue sur la figure 3 le logement L associé au train d'atterrissage relevable 100, logement qui est délimité par un carénage C du fuselage de l'avion, et dans lequel vient se loger, en position train haut, le balancier 103 de chaque jambe indépendante 101, avec la paire de roues R en diabolo correspondante.

La contre-fiche 110, avec son ressort d'assistance 121, constitue un moyen de verrouillage en position train bas extrêmement fiable. Un tel agencement de contrefiche ne permet bien entendu pas d'assurer un verrouillage en position train haut. Pour assurer un tel verrouillage, on pourra par exemple prévoir que la barre 108, ou celle des barres qui est la plus en avant, présente une protubérance avancée 122 équipée d'une olive qui est reçue dans un boîtier d'accrochage 123 (visible sur la figure 3). Ce boîtier d'accrochage peut être par exemple monté en protubérance sur la pièce de structure de la jambe située la plus en avant.

Le dispositif de contreventement 104 qui vient d'être décrit est en particulier bien adapté pour permettre une descente du train en position secours, en cas de panne hydraulique. La ou les barres de liaison servent naturellement au relevage du train, mais elles contribuent également à conférer une grande stabilité en position train bas.

Ainsi que cela a été dit plus haut, l'appendice 120 d'accrochage de la contre-fiche 110 est proche du panneau central, ce qui est favorable pour la répartition des charges et la rigidité de l'ensemble du train d'atterrissage.

Le train d'atterrissage 100 est en outre ici équipé d'un dispositif permettant de modifier l'orientation du diabolo arrière, ceci en vue d'améliorer la manoeuvrabilité lors du roulage sur piste. A cet effet, on constate que le balancier associé 103 est équipé d'un étrier 124 sur lequel est monté un petit vérin de manoeuvre 125, dont la tige agit sur un levier 126, monté pour osciller de part et d'autre d'une position moyenne autour d'un axe associé 126.1, en extrémité dudit balancier. L'appendice 116 sur lequel est accroché l'amortisseur 113 est alors solidaire de ce levier 126, comme cela est mieux visible sur les figures 1 et 2. Ainsi que cela a été dit plus haut, un tel dispositif d'orientation n'est naturellement qu'optionnel dans le cadre de l'invention.

On est ainsi parvenu à réaliser un train d'atterrissage relevable dont la structure confère une grande sécurité, tant au regard des manoeuvres de sortie qu'au regard de la répartition des charges, avec en particulier un verrouillage en position train bas qui est extrêmement fiable.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Train d'atterrissage relevable pour avion gros porteur, du type à relevage vertical, comportant une pluralité de jambes agencées les unes derrière les autres pour former, en position train bas, une rangée parallèle au plan longitudinal médian de l'avion, et en extrémité de chacune desquelles est montée une paire de roues, caractérisé en ce que chaque jambe (101) comporte une pièce de structure (102) rigidement solidaire d'une structure d'avion, un balancier (103) articulé sur l'extrémité inférieure de cette pièce de structure en pouvant pivoter autour d'un axe (Y) perpendiculaire au plan longitudinal médian de l'avion, de façon que ledit balancier soit relevable verticalement avec sa paire de roues (R), un panneau (106) articulé sur l'extrémité supérieure de ladite pièce de structure en pouvant pivoter autour d'un axe (X) parallèle à l'axe précité, et un amortisseur (113) reliant de façon articulée le panneau (106) à l'extrémité libre du balancier (103), et en ce qu'un dispositif de contreventement commun (104) est associé à ces jambes indépendantes, ledit dispositif comportant d'une part une ou plusieurs barres (108) reliant entre eux les panneaux (106) des jambes pour former des parallélogrammes articulés, de façon que les balanciers (103) soient relevables simultanément en actionnant un vérin de manoeuvre commun (105), et d'autre part une contre-fiche (110) à alignement constitué d'un premier bras (111) articulé sur une pièce de structure (102) avant, d'un second bras (112) articulé sur la ou l'une des barres (108) au voisinage de la pièce de structure immédiatement en arrière, ladite contre-fiche étant alignée en position train bas.

2. Train d'atterrissage selon la revendication 1, caractérisé en ce que le vérin de manoeuvre commun (105) est articulé d'une part sur le premier bras (111) de la contre-fiche (110), et d'autre part sur un prolongement (107) du panneau (106) adjacent à ce premier bras s'étendant au-delà de l'axe d'articulation (X) dudit panneau, de sorte que ledit vérin sert à la fois à briser l'alignement de la contre-fiche et à relever le train.

3. Train d'atterrissage selon la revendication 1 ou la revendication 2, caractérisé en ce que le premier bras (111) de la contre-fiche (110) est plus long que le second bras (112), et il est articulé sur la pièce de structure avant (102) coaxialement à l'axe d'articulation (X) du panneau (106) associé.

4. Train d'atterrissage selon la revendication 3, caractérisé en ce que la contre-fiche (110) est équipée d'un ressort (121) d'aide au verrouillage dans sa position alignée, reliant le second bras (112) de celle-ci au panneau (106) adjacent à ce second bras.

5. Train d'atterrissage selon la revendication 3, caractérisé en ce que la contre-fiche (110) est agencée de telle façon que, en position alignée, sa direction (D) rencontre l'articulation (109) reliant le panneau (106) adjacent au second bras (112) et la ou les barres de liaison associées (108).

6. Train d'atterrissage selon l'une des revendications 1 à 5, caractérisé en ce que chaque pièce de structure (102) est reliée à la structure d'avion à la fois directement (102.1), et indirectement par l'intermédiaire d'éléments de contreventement comportant un panneau (119) et au moins une bielle (117, 118).

7. Train d'atterrissage selon l'une des revendications 1 à 6, caractérisé en ce que les composants de chaque jambe (101) sont essentiellement identiques, et interchangeables pour le train gauche et le train droit de l'avion.

8. Train d'atterrissage selon l'une des revendications 1 à 7, comportant trois jambes (101) agencées les unes derrière les autres, caractérisé en ce que la contre-fiche (110) relie la pièce de structure (102) qui est la plus en avant à la barre (108) qui relie le panneau (106) articulé sur cette pièce de structure au panneau (106) central.

9. Train d'atterrissage selon la revendication 8, caractérisé en ce que la barre précitée (108) relie également le panneau (106) central au panneau (106) qui est le plus en arrière.

10. Train d'atterrissage selon la revendication 8, caractérisé en ce que le panneau (106) central et le panneau (106) qui est le plus en arrière sont reliés par une barre (108) distincte de la barre précitée, mais qui reste dans le prolongement de celle-ci.
